# EUROPÄISCHE PATENTSCHRIFT

(11) **EP 1 937 601 B1**
(45) Veröffentlichungstag und Bekanntmachung des Hinweises auf die Patenterteilung: **14.01.2009**
(21) Anmeldenummer: 06791581.9
(22) Anmeldetag: 17.08.2006
(51) Int. Cl.: C02F 1/56, C09D 7/00

(54) **HALOGENIDARME POLYMERLÖSUNG MIT KATIONISCHEN AMINOGRUPPEN, IHRE HERSTELLUNG UND IHRE VERWENDUNG**
POLYMER SOLUTION WITH CATIONIC AMINO GROUPS AND LOW HALIDE CONTENT AND PRODUCTION AND USE THEREOF
SOLUTION POLYMERE PAUVRE EN HALOGENURES COMPORTANT DES GROUPES AMINO CATIONIQUES ET UTILISATION

(30) Priorität: 18.10.2005 DE 102005050201
(43) Veröffentlichungstag der Anmeldung: 02.07.2008
(73) Patentinhaber: Henkel AG & Co. KGaA, 40589 Düsseldorf (DE)
(72) Erfinder: RÜSSE, Steffen, 40789 Monheim (DE); PEIROW, Iradj, 47802 Krefeld (DE); SENNER, Marcus, 41564 Kaarst (DE); SCHMIDT, Silvia, 42781 Haan (DE)
(86) Internationale Anmeldenummer: PCT/EP2006/008108
(87) Internationale Veröffentlichungsnummer: WO 2007/045295

(56) Entgegenhaltungen:
- WO-A-20/04015121
- WO-A-20/06087344

## Beschreibung

Die vorliegende Erfindung betrifft halogenidarme wässrige Lösungen von Polymeren, die durch Protonierung oder Quarternierung kationische Aminogruppen aufweisen, die Herstellung derartiger Lösungen und ihre Verwendung. Diese Polymerlösungen sind insbesondere verwendbar zur Behandlung wässriger Suspensionen oder Emulsionen, beispielsweise zum Koagulieren oder Ausflocken dieser Suspensionen oder Emulsionen, oder beispielsweise zum Entwässern von Schlämmen. Ihre Wirkung beruht darauf, dass die positiven Ladungen in den Polymermolekülen mit negativen Oberflächenladungen der suspendierten oder emulgierten Teilchen wechselwirken.

Polymere, die durch Protonierung oder Quarternierung kationische Aminogruppen aufweisen, enthalten herstellungsbedingt in der Regel als Gegenionen Halogenidionen, insbesondere Chloridionen. Die Herstellung solcher Polymere ist beispielsweise beschrieben in: Kirk-Othmer: "Encyclopedia of Chemical Technology", 4. Auflage, Band 11 (1994), Seite 66 und 67. Ein typisches Herstellungsverfahren besteht in der Umsetzung von Aminen mit Epichlorhydrin. Bei dieser Reaktion wird das Chloratom des Epichlorhydrins als Choridion abgespalten und verbleibt als Gegenion im Endprodukt.

Für viele Anwendungszwecke stört die Anwesenheit der Choridionen nicht, so dass bisher keine Anstrengungen unternommen wurden, die Chloridionen oder allgemein die Halogenidionen gegen andere Anionen auszutauschen. Bei Anwendungsfällen wie beispielsweise zur Koagulierung von Lacken im Umlaufwasser von Lackieranlagen mit Nassauswaschung binden sich die kationischen Polymermoleküle jedoch an die koagulierten Teilchen und werden mit diesen aus dem Kreislaufwasser ausgetragen. Die kationischen Polymermoleküle müssen daher laufend ergänzt werden. Die Chloridionen in der Polymerlösung werden jedoch in wesentlich geringerem Maße aus dem Umlaufwasser ausgetragen, so dass sie sich mit der Zeit im Umlaufwasser anreichern. Dies kann zu beträchtlichen Korrosionsproblemen führen. Daher besteht ein Bedarf an Lösungen kationischer Polymere, die möglichst wenig Halogenidionen und insbesondere Chloridionen als Gegenionen enthalten.

Die Verwendung von kationischen Polyaminen zur Koagulierung von Lacken im Umlaufwasser von Lackieranlagen mit Nassauswaschung ist wohl bekannt und wird beispielsweise in EP 124 850 beschrieben. Anstelle der kationischen Polyalkylenamine wie beispielsweise kationischem Polyethylenimin können auch abgewandelte Produkte wie beispielsweise die in WO 93/16140 beschriebenen Polyamidoamine eingesetzt werden. Diese können beispielsweise durch Umsetzung von Alkyldiaminen, Polyaminen oder Polyalkylpolyaminen mit ethylenisch ungesättigten Carboxylverbindungen erhalten werden. Zur Erzeugung der positiven Ladung wird durch Umsetzung mit Methylchlorid oder mit Epichlorhydrin quarterniert. Hierbei bilden sich aus den organischen Chlorverbindungen Chloridionen als Gegenionen der kationischen Polymere.

Gemäß der vorliegenden Erfindung wird die technisch gebräuchliche Herstellung der kationischen Polymere unter Verwendung von organischen Halogenverbindungen beibehalten. Die Halogenidionen werden nachträglich zumindest großteiles, d. h. zu mindestens 90 % (bezogen auf die Gesamtzahl der negativen Ladungen) gegen andere Anionen ausgetauscht.

Die vorliegende Erfindung betrifft daher in einem ersten Aspekt eine wässrige Lösung, die, bezogen auf die gesamte Lösung, 1 bis 60 Gew.-% mindestens eines Polymers enthält, das durch Protonierung oder Quarternierung kationische Aminogruppen aufweist, dadurch gekennzeichnet, dass nicht mehr als 10 Mol-% der Gegenionen der kationischen Aminogruppen Halogenidionen darstellen.

Vorzugsweise hat das Polymer eine Molmasse im Bereich von 3.000 und 5.000.000. (Die Molmassen der Polymere können beispielsweise durch Gelpermeationschromatographie bestimmt werden.) Besonders bevorzugt werden Polymere mit Molmassen bis zu 500 000, vorzugsweise im Bereich von 10 000 bis 500 000.

Wenn hierbei von "Mol-% der Gegenionen" die Rede ist, so bezieht sich dies auf die Gesamtzahl der negativen Ladungen. Dabei ist zu berücksichtigen, dass beispielsweise ein Sulfation in neutraler wässriger Lösung 2 negative Ladungen aufweist. Vorzugsweise stellen nicht mehr als 1 Mol-%, insbesondere nicht mehr als 0,5 Mol-% der Gegenionen der kationischen Aminogruppen Halogenidionen dar, d. h. nicht mehr als 1 %, vorzugsweise nicht mehr als 0,5 % der negativen Ladungen sollen durch Halogenidionen getragen werden.

Umgekehrt bedeutet dies, dass mindestens 90 Mol-%, vorzugsweise mindestens 99 Mol-% und insbesondere mindestens 99,5 Mol-% (bezogen auf die Zahl der negativen Ladungen) der Gegenionen der kationischen Aminogruppen anderen Anionen als Halogenidionen darstellen. Diese anderen Anionen können beispielsweise ausgewählt sein aus Hydroxidionen, Sulfationen, Phosphationen, Borationen, Nitrationen und aus Anionen organischer Säuren. Beispiele geeigneter organischer Säuren sind Ameisensäure, Essigsäure Propionsäure, Milchsäure.

Einleitend wurde bereits referiert, wie geeignete Polymere technisch erhalten werden können. Aufgrund der leichten technischen Verfügbarkeit ist es bevorzugt, dass das Polymer ausgewählt ist aus kationischen Polyalkyleniminen, insbesondere aus protonierten oder quarternierten Polyethyleniminen, protonierten oder quarternierten Polypropyleniminen, protonierten oder quarternierten Poly(2-Hydroxypropyleniminen), protonierten oder quarternierten Amidoaminen und aus Copolymeren die protonierte oder alkylierte 1,2-Ethandiamin-Baugruppen enthalten. Spezielle Beispiele hierfür sind Epichlorhydrin-Methylamin-Polymere und Copolymere von N,N,N',N'-Tetramethyl-1,2-ethandiamin, beispielsweise mit 1,1'-Oxybis[2-chlorethan]

Hergestellt werden können derartige Polymere beispielsweise nach den einleitend bereits genannten Literaturstellen WO 93/16140 und "Kirk-Othmer". Die Verwendung von Amidoaminen oder von kationischen Polyethyleniminen zur Lackkoagulierung ist in den schon genannten Dokumenten WO 93/16140 und EP 124 850 beschrieben.

Beispielsweise werden geeignete Polymere erhalten durch Umsetzung von Dimethylamin mit Epichlorhydrin. Dabei entsteht ein quarterniertes Poly(2-hydroxypropylenimin) mit 2 Methylgruppen am Stickstoffatom. Herstellungsbedingt werden die Anionen durch die Chloridionen gebildet, die aus dem Epichlorhydrin abgespalten wurden.

Soweit die Polymere quartäre Stickstoffatome enthalten, tragen sie eine dauerhafte positive Ladung. Polymere, die nur sekundäre und/oder tertiäre Stickstoffatome aufweisen, tragen jedoch in wässriger Lösung bei den typischen pH-Werten der Anwendung (etwa 6 bis etwa 9) zumindest anteilig ebenfalls positiv geladene Stickstoffatome aufgrund der zumindest teilweisen Anlagerung von Wasserstoffionen.

Die erfindungsgemäßen Polymerlösungen sind für unterschiedliche Anwendungszwecke verwendbar, auf die weiter unten näher eingegangen wird. Eine typische Verwendung besteht in der Entklebung / Koagulierung von Lackpartikeln im Umlaufwasser von Lackieranlagen mit Nassauswaschung. Diese Anwendung ist beispielsweise in EP 124 850 näher beschrieben, worauf hier ausdrücklich Bezug genommen wird. Für dieses Einsatzgebiet ist es bevorzugt, dass die Polymerlösung außer den kationischen Polymermolekülen noch Kationen 2- oder 3-wertiger Metalle enthält, beispielsweise Magnesium- und/oder Calcium- und/oder Aluminiumionen. Der Anteil dieser Kationen an der wässrigen Polymerlösung, wie sie zum Einsatz in der Lackkoagulierung verwendet wird, liegt beispielsweise im Bereich von etwa 1 bis etwa 30 Gew.-%. Diese hochgeladenen positiven Kationen unterstützen den Entklebungs- und Flockungsprozess der Lackpartikel. Die Verwendung von Aluminiumionen ist bevorzugt. Um die Bedingung "Halogenidarmut" einzuhalten, ist es bevorzugt, dass die Metallkationen nicht als Halogenide in die wässrige Lösung eingebracht werden. Statt dessen sind Nitrate oder Salze organischer Säure wie beispielsweise Acetate bevorzugt. Aluminium kann auch als Sulfat eingesetzt werden.

Die vorliegende Erfindung umfasst weiterhin Verfahren zur Herstellung der erfindungsgemäßen Lösungen, bei denen die herstellungsbedingt vorhandenen Halogenidionen durch andere Anionen ausgetauscht werden. Diese Verfahren können einerseits auf einem Anionenaustausch unter Verwendung eines Anionenaustauscher-Harzes und andererseits auf einer Membranfiltration, insbesondere einer Nanofiltration beruhen.

Die vorliegende Erfindung umfasst daher in einem weiteren Aspekt ein Verfahren zur Herstellung einer vorstehend beschriebenen wässrigen Polymerlösung, wobei man eine wässrige Lösung, die, bezogen auf die gesamte Lösung, 1 bis 60 Gew.-% mindestens eines Polymers, das durch Protonierung oder Quarternierung kationische Aminogruppen aufweist, und bei der mehr als 10 Mol-% der Gegenionen der kationischen Aminogruppen Halogenidionen darstellen, über einen mit Hydroxidionen beladenen Anionenaustauscher gibt, wobei die Halogenidionen zumindest teilweise durch Hydroxidionen ersetzt werden

Für die bevorzugten Polymere und deren Molmassen sowie die Anionen bzw. die entsprechenden Säuren gelten die vorstehenden Ausführungen sinngemäß.

Bei dem Ionenaustauscher-Verfahren überrascht, dass der Anionenaustauscher nicht durch die Polymerlösung geschädigt wird. Durch den Anionenaustauscher werden zunächst die Halogenidionen der Polymerlösung durch Hydroxidionen ersetzt. Dies führt zu einem Anstieg des pH-Werts der Polymerlösung auf Werte oberhalb von 9. Erwünschtenfalls kann der pH-Wert durch Zugabe einer anorganischen oder organischen Säure, die keine Halogenwasserstoffsäure darstellt, wieder auf den Bereich von etwa 6 bis etwa 9 abgesenkt werden. Beispiele geeigneter Säuren wurden vorstehend genannt. Hierdurch werden letztlich die Halogenidionen zumindest anteilig durch die Anionen der anderen Säuren ersetzt. Eine Erschöpfung des Anionenaustauschers zeigt sich darin, dass der pH-Wert der den Ionenaustauscher verlassenden Polymerlösung nicht mehr oberhalb von 9 liegt. Spätestens wenn dieser Fall eintritt, soll der Anionenaustauscher mit Hilfe einer starken Lauge wie beispielsweise Natronlauge regeneriert werden.

Bei Anwendung dieses Anionen-Austauscherverfahrens ist es bevorzugt, dass die Viskosität der Polymerlösung (bei der Temperatur des Anionenaustauschs, in der Regel Raumtemperatur) eine Viskosität im Bereich von etwa 50 bis etwa 200 mPas, beispielsweise im Bereich von etwa 100 mPas aufweist. (Die Viskosität ist beispielsweise messbar nach Brookfield mit Spindel LV3 bei 100 Umdrehungen pro Minute.) Im Handel erhältliche Polymerlösungen weisen üblicherweise aufgrund ihres Polymergehalts höhere Viskositäten auf. In diesem Fall ist es bevorzugt, den erwünschten Viskositätsbereich durch Verdünnen mit Wasser einzustellen.

Eine alternative erfindungsgemäße Ausführungsform besteht in einem Verfahren zur Herstellung einer vorstehend beschriebenen wässrigen Polymerlösung, wobei man eine wässrige Lösung, die, bezogen auf die gesamte Lösung, 1 bis 60 Gew.-% mindestens eines Polymers enthält, das durch Protonierung oder Quarternierung kationische Aminogruppen aufweist, und bei der mehr als 10 Mol-% der Gegenionen der kationischen Aminogruppen Halogenidionen darstellen, über eine Nanofiltrationsmembran im Kreislauf führt und dem (polymerhaltigen) Retentat der Nanofiltration eine anorganische oder organischen Säure, die keine Halogenwasserstoffsäure darstellt, oder jeweils ein wasserlösliches Salz dieser Säure, zugibt. Beispiele geeigneter Säuren wurden vorstehend genannt.

Auch hierbei gelten hinsichtlich bevorzugter Polymertypen, Molmassen und Gegenionen bzw. die entsprechenden Säuren die vorstehenden Ausführungen sinngemäß. Bei Einsatz der Nanofiltration dürfen die Polymerlösungen eine etwas höhere Viskosität aufweisen, als es im Falle des Anionenaustauschs bevorzugt ist. (Dabei gelten für die Messbedingungen der Viskosität die vorstehenden Erläuterungen.) Für die Nanofiltration liegt die Viskosität der Polymerlösung vorzugsweise im Bereich von etwa 100 bis etwa 400 mPas, insbesondere im Bereich von etwa 150 bis etwa 250 mPas. Dies ist wiederum durch Verdünnen viskoserer Polymerlösungen mit Wasser einstellbar. Vorzugsweise gibt man im Verlauf des Nanofiltrationsprozesses dem Retentatkreislauf (der die Polymerlösung enthält) zusätzlich vollentsalztes Wasser zu. Dies erleichtert das Auswaschen der Halogenidionen über die Nanofiltrationsmembran.

Ein weiterer Aspekt der vorliegenden Erfindung liegt in der Verwendung der vorstehend beschriebenen Polymerlösung zur Behandlung wässriger Suspensionen oder Emulsionen. Ziel dieser Behandlung ist das Koagulieren und/oder Ausflocken der in der Wasserphase suspendierten oder emulgierten Partikel. Für diese Anwendung liegt der pH-Wert in der wässrigen Suspension oder Emulsion typischerweise im Bereich von etwa 6 bis etwa 9.

Konkrete Beispiele derartiger wässriger Suspensionen oder Emulsionen sind: wässrige Schlämme, mit Feststoffen beladenes Abwasser, Prozesswasser aus der Papierindustrie, Prozesswasser aus der Kohle-, Erz- oder Mineraliengewinnung bzw. -aufbereitung, Kreislaufwasser in Kühlkreisläufen, Kreislaufwasser von Lackieranlagen mit Nassauswaschung sowie Kreislaufwasser für die Entstaubung von Gasen, beispielsweise von Rauchgasen. Bei der Behandlung wässriger Schlämme dient die erfindungsgemäße Polymerlösung als Entwässerungsmittel. Das heißt, die Auftrennung der wässrigen Schlämme unter Einwirkung von Schwerkraft oder künstlichen Beschleunigungskräften in eine Wasserphase und eine wasserärmere Feststoffphase wird unterstützt. Bei mit Feststoffen beladenem Abwasser kann es sich um jegliches kommunale oder insbesondere industrielle Abwasser handeln, in dem Feststoffteilchen suspendiert sind. Bei Prozesswasser aus der Papierindustrie werden insbesondere Cellulosefasern und ggf. Füllstoffe ausgeflockt. Dies kann zum einen die Herstellung des Papiers auf den Sieben bzw. Filtermatten erleichtern und kann zum anderen der Behandlung von Abwasser aus der Papierindustrie dienen. Aus Kreislaufwasser von Lackieranlagen werden die emulgierten bzw. suspendierten Lackpartikel durch die Wirkung der kationischen Polymere entklebt und koaguliert. Je nach Anlagengestaltung und weiteren Komponenten in dem zugesetzten Koaguliermittel können die Lackkoagulate flotieren oder sedimentieren.

Bei den vorstehend beispielhaft aufgezählten Anwendungen werden die Polymermoleküle in die entstehenden Schlämme oder Koagulate eingebunden und mit diesen aus der Wasserphase ausgetragen. Die Wasserphase verarmt also an Polymer. Dies wird üblicherweise dadurch kompensiert, dass man kontinuierlich oder diskontinuierlich den zu behandelnden wässrigen Suspensionen oder Emulsionen die ausgetragene Polymermenge wieder zudosiert. Welche Menge dies ist, hängt von den konkreten Gegebenheiten ab und muss durch Praxisversuche ermittelt werden. Als Richtwert kann gelten, dass man den zu behandelnden wässrigen Suspensionen oder Emulsionen eine solche Menge der erfindungsgemäßen wässrigen Polymerlösung pro Stunde Betriebszeit zugibt, die einer Konzentrationsänderung der Polymere in der Suspension oder Emulsion im Bereich von 0,1 bis 50 ppm pro Stunde entspricht.

Wie einleitend bereits ausgeführt, zeigt sich bei derartigen Anwendungen der Vorteil der vorliegenden Erfindung: Bei der Nachdosierung der Polymerlösung in die zu behandelnden Suspensionen oder Emulsionen werden wenige oder gar keine Halogenidionen zugegeben. In der Wasserphase, die in der Regel über Wochen bis Monate oder sogar Jahre hinweg im Kreislauf gefahren wird, stellt sich keine erhöhte Korrosionsgefahr durch steigende Konzentrationen an Halogenidionen, insbesondere an Chloridionen, ein. Hierdurch verlängern sich gegenüber der derzeitigen Verfahrensweise die Intervalle, zu denen das Kreislaufwasser schließlich ausgetauscht werden muss.

## Patentansprüche

1. Verfahren zur Herstellung einer wässrigen Lösung, die, bezogen auf die gesamte Lösung, 1 bis 60 Gew.-% mindestens eines Polymers enthält, das durch Protonierung oder Quarternierung kationische Aminogruppen aufweist, wobei nicht mehr als 10 Mol-% der Gegenionen der kationischen Aminogruppen Halogenidionen darstellen, **dadurch gekennzeichnet, dass** man eine wässrige Lösung, die, bezogen auf die gesamte Lösung, 1 bis 60 Gew.-% mindestens eines Polymers enthält, das durch Protonierung oder Quarternierung kationische Aminogruppen aufweist, und bei der mehr als 10 Mol-% der Gegenionen der kationischen Aminogruppen Halogenidionen darstellen, über eine Nanofiltrationsmembran im Kreislauf führt und dem Retentat der Nanofiltration eine anorganische oder organische Säure, die keine Halogenwasserstoffsäure darstellt, oder jeweils ein wasserlösliches Salz dieser Säure, zugibt.

2. Verfahren zur Herstellung einer wässrigen Lösung nach Anspruch 1, **dadurch gekennzeichnet, dass** nicht mehr als 1 Mol-%, vorzugsweise nicht mehr als 0,5 Mol-% der Gegenionen der kationischen Aminogruppen als Halogenidionen vorliegen.

3. Verfahren zur Herstellung einer wässrigen Lösung nach Anspruch 1 oder 2, **dadurch gekennzeichnet, dass** mindestens 90 Mol-%, vorzugsweise mindestens 99 Mol-%, insbesondere mindestens 99,5 Mol-% der Gegenionen der kationischen Aminogruppen ausgewählt sind aus Hydroxidionen, Sulfationen, Phosphationen, Borationen, Nitrationen und aus Anionen organischer Säuren.

4. Verfahren zur Herstellung einer wässrigen Lösung nach einem oder mehreren der Ansprüche 1 bis 3, **dadurch gekennzeichnet, dass** das Polymer ausgewählt ist aus kationischen Polyalkyleniminen, insbesondere aus protonierten oder quarternierten Polyethyleniminen, protonierten oder quarternierten Polypropyleniminen, protonierten oder quarternierten Poly(2-Hydroxypropylen-iminen), protonierten oder quarternierten Amidoaminen und aus Copolymeren die protonierte oder alkylierte 1,2-Ethandiamin-Baugruppen enthalten.

5. Verwendung einer wässrigen Lösung, die, bezogen auf die gesamte Lösung, 1 bis 60 Gew.-% mindestens eines Polymers enthält, das durch Protonierung oder Quarternierung kationische Aminogruppen aufweist, wobei nicht mehr als 10 Mol-% der Gegenionen der kationischen Aminogruppen Halogenidionen darstellen, zur Behandlung wässriger Suspensionen oder Emulsionen.

6. Verwendung nach Anspruch 5, **dadurch gekennzeichnet, dass** nicht mehr als 1 Mol-%, vorzugsweise nicht mehr als 0,5 Mol-% der Gegenionen der kationischen Aminogruppen als Halogenidionen vorliegen.

7. Verwendung nach Anspruch 5 oder 6, **dadurch gekennzeichnet, dass** mindestens 90 Mol-%, vorzugsweise mindestens 99 Mol-%, insbesondere mindestens 99,5 Mol-% der Gegenionen der kationischen Aminogruppen ausgewählt sind aus Hydroxidionen, Sulfationen, Phosphationen, Borationen, Nitrationen und aus Anionen organischer Säuren.

8. Verwendung nach einem oder mehreren der Ansprüche 5 bis 7, **dadurch gekennzeichnet, dass** das Polymer ausgewählt ist aus kationischen Polyalkyleniminen, insbesondere aus protonierten oder quarternierten Polyethyleniminen, protonierten oder quarternierten Polypropyleniminen, protonierten oder quarternierten Poly(2-Hydroxypropylen-iminen), protonierten oder quarternierten Amidoaminen und aus Copolymeren die protonierte oder alkylierte 1,2-Ethandiamin-Baugruppen enthalten.

9. Verwendung nach einem oder mehreren der Ansprüche 5 bis 8, **dadurch gekennzeichnet, dass** die wässrige Lösung zusätzlich zweiwertige und/oder dreiwertige Metallionen, vorzugsweise Magnesium- und/oder Calcium- und/oder Aluminiumionen enthält.

10. Verwendung nach einem oder mehreren der Ansprüche 5 bis 9, **dadurch gekennzeichnet, dass** die behandelten wässrigen Suspensionen oder Emulsionen ausgewählt sind aus: wässrigen Schlämmen, mit Feststoffen beladenem Abwasser, Prozesswasser aus der Papierindustrie, Prozesswasser aus der Kohle-, Erz- oder Mineraliengewinnung bzw. -aufbereitung, Kreislaufwasser in Kühlkreisläufen, Kreislaufwasser von Lackieranlagen, Kreislaufwasser für die Entstaubung von Gasen.

11. Verwendung nach einem oder mehreren der Ansprüche 5 bis 10, **dadurch gekennzeichnet, dass** man den zu behandelnden wässrigen Suspensionen oder Emulsionen eine Menge der wässrigen Lösung pro Stunde Betriebszeit zugibt, die einer Konzentrationsänderung der Polymere in der Suspension oder Emulsion im Bereich von 0,1 bis 50 ppm pro Stunde entspricht.

## Claims

1. A method for preparing an aqueous solution, which, based on the whole solution, contains 1 to 60% by weight of at least one polymer, which has cationic amino groups obtained by protonation or quarternation wherein not more than 10% by moles of the counter-ions of the cationic amino groups represent halide ions, **characterized in that** an aqueous solution, which, based on the total solution, contains 1 to 60% by weight of at least one polymer, which has cationic amino groups obtained by protonation or quaternation and in which more than 10% by moles of the counter-ions of the cationic amino groups represent halide ions, is circulated in a loop over a nanofiltration membrane and an inorganic or organic acid which does not represent any hydrohaloacid, or respectively a water-soluble salt of this acid, is added to the retentate of the nanofiltration.

2. The method for preparing an aqueous solution according to claim 1, **characterized in that**, not more than 1% by moles, preferably not more than 0.5% by moles of the counter-ions of the cationic amino groups exist as halide ions.

3. The method for preparing an aqueous solution according to claim 1 or 2, **characterized in that** at least 90% by moles, preferably at least 99% by moles, in particular at least 99.5% by moles of the counter-ions of the cationic amino groups are selected from hydroxide ions, sulfate ions, phosphate ions, borate ions, nitrate ions and anions of organic acids.

4. The method for preparing an aqueous solution according to one or more of claims 1 to 6, **characterized in that** the polymer is selected from cationic polyalkylene-imines, in particular protonated or quarternated polyethylene-imines, protonated or quaternated polypropylene-imines, protonated or quaternated poly(2-hydroxypropylene-imines), protonated or quaternated amido-amines, and from copolymers which contain protonated or alkylated 1,2-ethanediamine structural groups.

5. The use of an aqueous solution, which, based on the total solution, contains 1 to 60% by weight of at least one polymer, which has cationic amino groups obtained by protonation or quaternation, wherein not more than 10% by moles of the counter-ions of the cationic amino groups represent halide ions, for treating aqueous suspensions or emulsions.

6. The use according to claim 5, **characterized in that** not more than 1% by moles, preferably not more than 0.5% by moles of counter-ions of the cationic amino groups exist as halide ions.

7. The use according to claim 5 or 6, **characterized in that** at least 90% by moles, preferably at least 99% by moles, in particular at least 99.5% by moles of the counter-ions of the cationic amino groups are selected from hydroxide ions, sulfate ions, phosphate ions, borate ions, nitrate ions and anions of organic acids.

8. The use according to one or more of claims 5 to 7, **characterized in that** the polymer is selected from cationic polyalkylene-imines, in particular from protonated or quaternated polyethylene-imines, protonated or quaternated polypropylene-imines, protonated or quaternated poly(2-hydroxypropylene-imines), protonated or quaternated amido-amines and from copolymers which contain protonated or alkylated 1,2-ethanediamine structural groups.

9. The use according to one or more of claims 5 to 8, **characterized in that** the aqueous solution further contains bivalent and/or trivalent metal ions, preferably magnesium and/or calcium and/or aluminium ions.

10. The use according to one or more of claims 5 to 9, **characterized in that** the treated aqueous suspensions or emulsions are selected from: aqueous slurries, waste water loaded with solids, process water from the paper industry, process water from coal, ore or mineral extraction or preparation, circulation water in cooling circuits, circulation water from enameling lines, circulation water for de-dusting of gases.

11. The use according to one or more of claims 5 to 10, **characterized in that** an amount of the aqueous solution which corresponds to a change in concentration of the polymer in the suspension or emulsion in the range from 0.1 to 50 ppm per hour is added to the aqueous suspensions or emulsions to be treated per hour of operation.

## Revendications

1. Procédé pour la préparation d'une solution aqueuse qui contient, par rapport à la solution totale, 1 à 60% en poids d'au moins un polymère qui présente des groupes amino cationiques par protonation ou quaternisation, pas plus de 10% en mole des contre-ions des groupes amino cationiques étant des ions halogénure, **caractérisé en ce qu'**on met en circulation une solution aqueuse qui contient, par rapport à la solution totale, 1 à 60% en poids d'au moins un polymère, qui présente des groupes amino cationiques par protonation ou quaternisation et dans lequel plus de 10% en mole des contre-ions des groupes amino cationiques sont des ions halogénure, sur une membrane de nanofiltration et on ajoute au rétentat de la nanofiltration un acide inorganique ou organique, qui n'est pas un acide halogénohydrique, ou respectivement un sel soluble dans l'eau de cet acide.

2. Procédé pour la préparation d'une solution aqueuse selon la revendication 1, **caractérisé en ce que** pas plus de 1% en mole, de préférence pas plus de 0,5% en mole des contre-ions des groupes amino cationiques se trouve sous forme d'ions halogénure.

3. Procédé pour la préparation d'une solution aqueuse selon la revendication 1 ou 2, **caractérisé en ce qu'**au moins 90% en mole, de préférence au moins 99% en mole, en particulier au moins 99,5% en mole des contre-ions des groupes amino cationiques sont choisis parmi les ions hydroxyde, sulfate, phosphate, borate, nitrate et les anions d'acides organiques.

4. Procédé pour la préparation d'une solution aqueuse selon l'une ou plusieurs des revendications 1 à 3, **caractérisé en ce que** le polymère est choisi parmi les polyalkylénimines cationiques, en particulier les polyéthylénimines protonées ou quaternisées, les polypropylénimines protonées ou quaternisées, les poly(2-hydroxypropylénimines) protonées ou quaternisées, les amidoamines protonées ou quaternisées et les copolymères qui contiennent des groupes structurels 1,2-éthanediamine protonés ou alkylés.

5. Utilisation d'une solution aqueuse qui, par rapport à la solution totale, contient 1 à 60% en poids d'au moins un polymère, qui présente des groupes amino cationiques par protonation ou quaternisation, pas plus de 10% en mole des contre-ions des groupes amino cationiques représentant des ions halogénure, pour le traitement de suspensions ou d'émulsions aqueuses.

6. Utilisation selon la revendication 5, **caractérisée en ce que** pas plus de 1% en mole, de préférence pas plus de 0,5% en mole des contre-ions des groupes amino cationiques se trouve sous forme d'ions halogénure.

7. Utilisation selon la revendication 5 ou 6, **caractérisée en ce qu'**au moins 90% en mole, de préférence au moins 99% en mole, en particulier au moins 99,5% en mole des contre-ions des groupes amino cationiques sont choisis parmi les ions hydroxyde, sulfate, phosphate, borate, nitrate et les anions d'acides organiques.

8. Utilisation selon l'une ou plusieurs des revendications 5 à 7, **caractérisée en ce que** le polymère est choisi parmi les polyalkylénimines cationiques, en particulier les polyéthylénimines protonées ou quaternisées, les polypropylénimines protonées ou quaternisées, les poly(2-hydroxypropylénimines) protonées ou quaternisées, les amidoamines protonées ou quaternisées et les copolymères qui contiennent des groupes structurels 1,2-éthanediamine protonés ou alkylés.

9. Utilisation selon l'une ou plusieurs des revendications 5 à 8, **caractérisée en ce que** la solution aqueuse contient en outre des ions métalliques divalents et/ou trivalents, de préférence des ions de magnésium et/ou de calcium et/ou d'aluminium.

10. Utilisation selon l'une ou plusieurs des revendications 5 à 9, **caractérisée en ce que** les suspensions ou émulsions aqueuses traitées sont choisies parmi : les boues aqueuses, les eaux usées chargées de solides, les eaux de procédé provenant de l'industrie papetière, les eaux de procédé provenant de la production ou du traitement de charbon, de minerai ou de minéraux, les eaux de circulation dans les circuits de refroidissement, les eaux de circulation d'installations de laquage, les eaux de circulation pour le dépoussiérage de gaz.

11. Utilisation selon l'une ou plusieurs des revendications 5 à 10, **caractérisée en ce qu'**on ajoute, aux suspensions ou émulsions aqueuses à traiter une quantité de la solution aqueuse par heure de temps de fonctionnement qui correspond à une modification de la concentration en polymères dans la suspension ou l'émulsion dans la plage de 0,1 à 50 ppm par heure.
